# EUROPEAN PATENT SPECIFICATION

(11) **EP 3 361 683 B1**
(45) Date of publication and mention of the grant of the patent: **11.11.2020**
(21) Application number: 16853006.1
(22) Date of filing: 24.06.2016
(51) Int. Cl.: H04L 12/761, H04L 12/721

(54) **PATH COMPUTATION METHOD AND DEVICE**
VERFAHREN UND VORRICHTUNG ZUR WEGBERECHNUNG
PROCÉDÉ ET DISPOSITIF DE CALCUL DE TRAJET

(30) Priority: 09.10.2015 CN 201510648552
(43) Date of publication of application: 15.08.2018
(73) Proprietor: ZTE Corporation, Shenzhen, Guangdong 518057 (CN)
(72) Inventor: CHEN, Ran, Shenzhen, Guangdong 518057 (CN); WU, Bo, Shenzhen, Guangdong 518057 (CN); ZHANG, Zheng, Shenzhen, Guangdong 518057 (CN)
(74) Representative: Aipex B.V.
(86) International application number: PCT/CN2016/087109
(87) International publication number: WO 2017/059699

(56) References cited:
- CN-A- 101 467 401
- CN-A- 101 491 041
- CN-A- 104 811 387
- US-A1- 2015 131 658
- US-A1- 2015 138 961
- US-A1- 2015 181 309
- ECKERT CISCO SYSTEMS T ET AL: "Traffic Enginering for Bit Index Explicit Replication BIER-TE; draft-eckert-bier-te-arch-01.txt", TRAFFIC ENGINERING FOR BIT INDEX EXPLICIT REPLICATION BIER-TE; DRAFT-ECKERT-BIER-TE-ARCH-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 July 2015 (2015-07-06), pages 1-23, XP015107276, [retrieved on 2015-07-06]
- ED JF. VASSEUR: "RFC 5440 - Path Computation Element (PCE) Communication Protocol (PCEP)", IETF, 31 March 2009 (2009-03-31), XP055131169,
- VASSEUR, JP . ET AL.: 'Path Computation Element (PCE) Communication Protocol (PCEP' RFC 5440 31 March 2009, pages 10 - 12, XP055131169
- ECKERT, T.: 'Traffic Engineering for Bit Index Explicit Replication BIER-TE' DRAFT-ECKERT-BIER-TE-ARCH-00 23 January 2015, pages 1 - 30, XP015125310

## Description

### TECHNICAL FIELD

The present disclosure relates to, but is not limited to, the field of communications, and in particular, to a path computation method and a path computation device.

### BACKGROUND

An internet protocol (IP for short) multicast technology enables efficient point-to-multipoint data transmission in an IP network. It can effectively save network bandwidth and reduce network load. Therefore, it is widely applied in many aspects such as real-time data transmission, multimedia conferencing, data copying, internet protocol television (IPTV for short), games, and simulation. A current multicast technology is generally implemented by employing a protocol independent multicast (PIM for short) protocol including a protocol independent multicast-sparse mode (PIM-SM for short), a protocol independent multicast-dense mode (PIM-DM for short), and a multicast source discovery protocol (MSDP for short) and the like. A common feature of these multicast protocols is to construct a control plane multicast tree, and a network plane is logicalized into a tree by using such a multicast tree, so as to achieve point-to-multipoint data forwarding and loop avoidance for multicast forwarding. An intermediate node of such a multicast routing protocol with a core of constructing a distribution tree needs to maintain a complicated status of multicast forwarding information. As the scale of a network becomes larger and multicast data traffic increases every day, such a multicast technology faces more and more challenges in terms of cost and operation and maintenance.

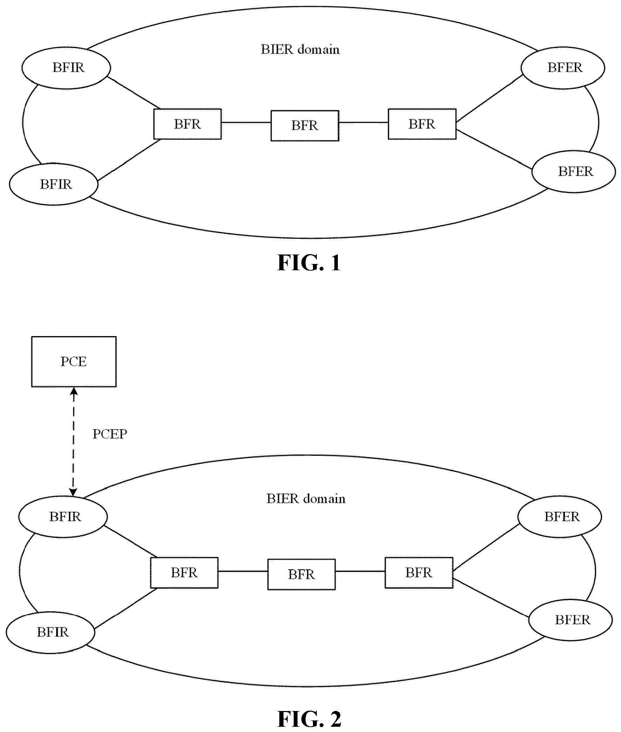

In view of the above, a novel technology for constructing a multicast forwarding path is proposed in the industry, which is known as a bit indexed explicit replication (BIER) technology. As shown in FIG. 1, which is a networking diagram of a BIER technology in the related art, this technology proposes a novel multicast technology architecture without constructing a multicast distribution tree. The BIER technology is a bit-based multicast replication technology. A BIER domain includes a bit-forwarding ingress router (BFIR for short), a bit forwarding router (BFR for short), and a bit-forwarding egress router (BFER for short). In the BIER domain, each edge BFER is allocated with a globally unique bit position in an entire BIER sub-domain. Each BFER floods its bit position in the BIER domain by using an interior gateway protocol (IGP for short), all bit positions make up a bitstring, and transmission and routing of a data packet in the BIER domain depend on the bitstring. When a further BFR receives a packet header containing the BIER, the packet is forwarded based on a bit forwarding table according to the bitstring carried in the packet header containing the BIER. Such a principle of performing forwarding based on a BIER bit is to change forwarding based on the construction of the multicast forwarding tree previously into forwarding multicast of performing unicast search forwarding by using a bit identifier, which greatly reduces the forwarding cost of the network.

A BIER path may originate from an IGP shortest path tree (SPT for short). However, a path having bit indexed explicit replication-traffic engineering (BIER-TE for short) is generally not a result in accordance with the IGP SPT, but a result selected via an appropriate network tool deployed on a source node of the BIER-TE path.

A path control element (PCE for short) is an entity capable of computing a path between any nodes it knows in an autonomous system (AS for short), which may be integrated inside a router, or may exist as a separate entity in the network, or may be integrated together with a network management system. The PCE is particularly useful because it knows better about network flows and path selections within its AS and accordingly can be used for better path computations. The BIER node may work as a path computation client (PCC for short), the PCC is configured to transmit a path computation to the PCE and receive a response with a computed path.

The RFC5440 describes a path computation element protocol (PCEP for short), which is for communication between the PCC and the PCE, or for communication between two PCEs. The PCE computes a BIER-TE path based on one or more constraint and optimization conditions. As shown in FIG. 2, FIG. 2 is a networking diagram of a PCE-based BIER-TE technology in the related art. However, there is no relevant technology capable of quickly computing the BIER-TE path that meets service requirements. Further relevant technologies are also known from ECKERT CISCO SYSTEMS T ET AL: "Traffic Enginering for Bit Index Explicit Replication BIER-TE; draft-eckert-bier-te-arch-01.txt", TRAFFIC ENGINERING FOR BIT INDEX EXPLICIT REPLICATION BIER-TE; DRAFT-ECKERT-BIER-TE-ARCH-01.TXT, INTERNET ENGINEERING TASK FORCE, IETF; STANDARDWORKINGDRAFT, INTERNET SOCIETY (ISOC) 4, RUE DES FALAISES CH-1205 GENEVA, SWITZERLAND, 6 July 2015 (2015-07-06), pages 1-23, XP015107276; US 2015/181309 A1 (SHEPHERD GREGORY J [US] ET AL) 25 June 2015 (2015-06-25) which relates to bit indexed explicit replication for professional media networks; and ED JF. VASSEUR: "RFC 5440-Path Computation Element (PCE) Communication Protocol (PCEP)", IETF, 31 March 2009 (2009-03-31), XP055131169.

Regarding the problem in the related art that the BIER-TE path that meets the service requirements cannot be quickly computed, no effective solution has been proposed.

### SUMMARY

The following is an overview of a subject matter detailed in the present disclosure. This summary is not intended to limit the protection scope of the claims.

Embodiments of the present disclosure provide a path computation method and a path computation device as defined in the attached independent claims, which may at least solve a problem in the related art that a BIER-TE path that meets service requirements cannot be quickly computed. Further improvements are provided in the dependent claims.

The embodiments of the present disclosure adopt the following technical solutions.

A path computation method includes: receiving a path computation request transmitted by a path computation client (PCC), where the path computation request is used to request to compute a bit indexed explicit replication-traffic engineering (BIER-TE) path; and computing the path according to the path computation request.

Optionally, the computing the path according to the path computation request includes: computing the path according to the path computation request and by utilizing at least one of the following information: topological information of a BIER network, constraint information of the BIER-TE path and BIER information.

Optionally, the constraint information of the BIER-TE path is carried in the path computation request, where the constraint information of the BIER-TE path includes at least one of the following: a link bandwidth, a reserved bandwidth, link coloring, and a metric; and/or, the BIER information is carried in the path computation request, where the BIER information includes at least one of the following: BIER sub-domain information, bitstring length (BSL) information, source bit-forwarding router identifier information, and one or more pieces of destination bit-forwarding router identifier information.

Optionally, the path computation request carries at least one of the following information: indication information for indicating that the path is established by using a BIER-TE technology; and a BIER record route object (RRO), where the BIER RRO is used to report a route followed by the BIER-TE path desired to be re-optimized.

Optionally, after the computing the path according to the path computation request, the method further includes: determining whether the path is successfully computed or not; and when it is determined that the path is computed successfully, notifying the computed BIER-TE path to the PCC; and/or, when it is determined that the path is not successfully computed, returning a failure response message to the PCC.

Optionally, the notifying the computed BIER-TE path to the PCC includes: notifying bitstring information and a bitstring length (BSL) to the PCC, or notifying bit-forwarding router identifier information to the PCC; and/or, a cause of a computation failure of the BIER-TE path is carried in the failure response message.

Optionally, the notifying the computed BIER-TE path to the PCC includes: carrying the computed BIER-TE path in a path request reply message and notifying the computed BIER-TE path to the PCC; where after the carrying the computed BIER-TE path in the path request reply message and notifying the computed BIER-TE path to the PCC, the method further includes: receiving an error notification transmitted by the PCC, where the error notification is used to indicate that the PCC cannot identify the path request reply message and/or the PCC cannot support a type of the path request reply message.

Optionally, before the receiving the path computation request transmitted by the PCC, the method further includes: negotiating with the PCC to support a BIER-TE capability.

Optionally, the negotiating with the PCC to support the BIER-TE capability includes: negotiating with the PCC to support the BIER-TE capability by means of a manner of extending an open message in a path computation element protocol (PCEP).

A path computation method includes: transmitting a path computation request to a path computation element (PCE), where the path computation request is used to request the PCE to compute a bit indexed explicit duplication traffic engineering (BIER-TE) path.

Optionally, the path computation request carries at least one of following information: indication information indicating that the path is established by using a BIER technology, constraint information of the BIER-TE path, BIER information, and BIER record route object (RRO). The constraint information of the BIER-TE path includes at least one of the following: a link bandwidth, a reserved bandwidth, link coloring, and a metric. The BIER information includes at least one of the following: BIER sub-domain information, bitstring length (BSL) information, source bit-forwarding router identifier information, and one or more pieces of destination bit-forwarding router identifier information. The BIER RRO is used to report a route followed by the BIER-TE path desired to be re-optimized.

Optionally, after the transmitting the path computation request to the PCE, the method further includes: receiving the BIER-TE path transmitted by the PCE after the BIER-TE path is successfully computed by the PCE; and/or receiving a failure response message returned by the PCE after the BIER-TE path is not successfully computed by the PCE.

Optionally, the receiving the BIER-TE path includes: receiving bitstring information and a bitstring length (BSL), or receiving bit-forwarding router identifier information; and/or, a cause of a computation failure of the BIER-TE path is carried in the failure response message.

Optionally, the receiving the BIER-TE path includes: receiving a path request reply message notified by the PCE, where the path request reply message carries the BIER-TE path computed by the PCE; and when it is determined that the path request reply message cannot be identified and/or a type of the path request reply message cannot be supported is determined, transmitting an error notification to the PCE.

Optionally, before the transmitting the path computation request to the PCE, the method further includes: negotiating with the PCE to support a BIER-TE capability.

Optionally, the negotiating with the PCE to support a BIER-TE capability includes: negotiating with the PCE to support the BIER-TE capability by means of a manner of extending an open message in a path computation element protocol (PCEP).

A path computation device includes a first reception module, which is configured to receive a path computation request transmitted by a path computation client (PCC), where the path computation request is used to request to compute a bit indexed explicit replication-traffic engineering (BIER-TE) path; and a computation module, which is configured to compute the path according to the path computation request.

Optionally, the computation module includes a computation unit, which is configured to compute the path according to the path computation request and by utilizing at least one of the following information: topological information of a BIER network, constraint information of the BIER-TE path and BIER information.

Optionally, the constraint information of the BIER-TE path is carried in the path computation request, where the constraint information of the BIER-TE path includes at least one of the following: a link bandwidth, a reserved bandwidth, link coloring, and a metric; and/or, the BIER information is carried in the path computation request, where the BIER information includes at least one of the following: BIER sub-domain information, bitstring length (BSL) information, source bit-forwarding router identifier information, and one or more pieces of destination bit-forwarding router identifier information.

Optionally, the path computation request carries at least one of the following information: indication information for indicating that the path is established by using a BIER-TE technology; and a BIER record route object (RRO), where the BIER RRO is used to report a route followed by the BIER-TE path desired to be re-optimized.

Optionally, the device further includes a determination module, which is configured to, after the path is computed according to the path computation request, determine whether the path is successfully computed or not; and a notification module, which is configured to, notify the computed BIER-TE path to the PCC when it is determined that the path is computed successfully; and/or return a failure response message to the PCC when it is determined that the path is not successfully computed.

Optionally, the device further includes at least one of the following: the notification module includes a first notification unit, which is configured to, when notifying the computed BIER-TE path to the PCC, notify bitstring information and a bitstring length (BSL) to the PCC, or notify bit-forwarding router identifier information to the PCC; and/or, a cause of a computation failure of the BIER-TE path is carried in the failure response message.

Optionally, the notification module includes a second notification unit, which is configured to, when notifying the computed BIER-TE path to the PCC, carry the computed BIER-TE path in a path request reply message and notify the computed BIER-TE path to the PCC; the device further includes a second reception module, which is configured to receive an error notification transmitted by the PCC after the computed BIER-TE path is carried in the path request reply message and notified to the PCC, where the error notification is used to indicate that the PCC cannot identify the path request reply message and/or the PCC cannot support a type of the path request reply message.

Optionally, the device further includes a first negotiation module, which is configured to, before the path computation request transmitted by the PCC is received, negotiate with the PCC to support a BIER-TE capability.

Optionally, the first negotiation module includes a first negotiation unit, which is configured to negotiate with the PCC to support the BIER-TE capability by means of a manner of extending an open message in a path computation element protocol (PCEP).

A path computation device includes a first transmission module, which is configured to transmit a path computation request to a path computation element (PCE), where the path computation request is used to request the PCE to compute a bit indexed explicit duplication traffic engineering (BIER-TE) path.

Optionally, the path computation request carries at least one of following information: indication information indicating that the path is established by using a BIER technology, constraint information of the BIER-TE path, BIER information, and BIER record route object (RRO), where the constraint information of the BIER-TE path includes at least one of the following: a link bandwidth, a reserved bandwidth, link coloring, and a metric, and the BIER information includes at least one of the following: BIER sub-domain information, bitstring length (BSL) information, source bit-forwarding router identifier information, and one or more pieces of destination bit-forwarding router identifier information, where the BIER RRO is used to report a route followed by the BIER-TE path desired to be re-optimized.

Optionally, the device further includes a third reception module, which is configured to, after the path computation request is transmitted to the PCE, receive the BIER-TE path transmitted by the PCE after the BIER-TE path is successfully computed by the PCE; and/or receive a failure response message returned by the PCE after the BIER-TE path is not successfully computed by the PCE.

Optionally, the third reception module further includes a first reception unit, which is configured to, when receiving the BIER-TE path, receive bitstring information and a bitstring length (BSL), or receive bit-forwarding router identifier information; and/or, a cause of a computation failure of the BIER-TE path is carried in the failure response message.

Optionally, the third reception module includes a second reception unit, which is configured to, when receiving the BIER-TE path, receive a path request reply message notified by the PCE, where the path request reply message carries the BIER-TE path computed by the PCE; and the device further includes a second transmission module, which is configured to, when it is determined that the path request reply message cannot be identified and/or a type of the path request reply message cannot be supported, transmit an error notification to the PCE.

Optionally, the device further includes a second negotiation module, which is configured to, before the path computation request is transmitted to the PCE, negotiate with the PCE to support a BIER-TE capability.

Optionally, the second negotiation module includes a second negotiation unit, which is configured to negotiate with the PCE to support the BIER-TE capability by means of a manner of extending an open message in a path computation element protocol (PCEP).

A storage medium is configured to store a program code for performing steps of the above methods.

In the embodiments of the present disclosure, a path computation request transmitted by a PCC is received, where the path computation request is used to request to compute a BIER-TE path; and the path is computed according to the path computation request, so that a problem in the related art that the BIER-TE path that meets service requirements cannot be quickly computed is solved, and an effect of quickly computing the BIER-TE path that meets the service requirements is achieved.

Other aspects may be understood upon reading and understanding accompanying drawings and detailed description, and according to the embodiments of the disclosure a method according to claim 1 or 7 and a device according to claim 11 or 14 are provided.

### BRIEF DESCRIPTION OF DRAWINGS

FIG. 1 is a networking diagram of a BIER technology in the related art;
FIG. 2 is a networking diagram of a PCE-based BIER-TE technology in the related art;
FIG. 3 is a first flow chart of a path computation method according to an embodiment of the present disclosure;
FIG. 4 is a second flow chart of a path computation method according to an embodiment of the present disclosure;
FIG. 5 is a structural block diagram showing a first path computation device according to an embodiment of the present disclosure;
FIG. 6 is a structural block diagram showing a computation module 54 in the first path computation device according to an embodiment of the present disclosure;
FIG. 7 is a first block diagram showing a preferred structure of the first path computation device according to an embodiment of the present disclosure;
FIG. 8 is a second block diagram showing a preferred structure of the first path computation device according to an embodiment of the present disclosure;
FIG. 9 is a block diagram showing a structure of a first negotiation module 82 in the first path computation device according to an embodiment of the present disclosure;
FIG. 10 is a block diagram showing a structure of a second path computation device according to an embodiment of the present disclosure;
FIG. 11 is a first block diagram showing a preferred structure of the second path computation device according to an embodiment of the present disclosure;
FIG. 12 is a second block diagram showing a preferred structure of the second path computation device according to an embodiment of the present disclosure;
FIG. 13 is a block diagram showing a structure of a second negotiation module 122 in the second path computation device according to an embodiment of the present disclosure;
FIG. 14 is a schematic diagram of PCEP message interaction between a PCC and a PCE according to a first implementation example of the present disclosure
FIG. 15 is a flow chart of a PCEP message between a PCC and a PCE according to the first implementation example of the present disclosure;
FIG. 16 is a schematic diagram of PCEP message interaction between a PCC and a PCE according to a second implementation example of the present disclosure;
FIG. 17 is a flow chart of a PCEP message between a PCC and a PCE according to the second implementation example of the present disclosure;
FIG. 18 is a schematic diagram of PCEP message interaction between a PCC and a PCE according to a third implementation example of the present disclosure;
FIG. 19 is a flow chart of a PCEP message between a PCC and a PCE according to the third implementation example of the present disclosure;
FIG. 20 is a schematic diagram of carrying path establishment type information according to a fourth implementation example of the present disclosure;
FIG. 21 is a schematic diagram of carrying BIER information according to a fourth implementation example of the present disclosure;
FIG. 22(a) and FIG. 22(b) are schematic diagrams of carrying information of BIER-TE path according to the fourth implementation example of the present disclosure; and
FIG. 23(a) and FIG. 23(b) are schematic diagrams of carrying a RRO according to the fourth implementation example of the present disclosure.

### DETAILED DESCRIPTION

It should be noted that embodiments in the present application and features in the embodiments may be combined with each other in case of no conflict.

It should be noted that terms "first", "second" and the like in the specification and claims of the present application as well as in the above accompanying drawings are used to distinguish similar objects and are not necessarily used to describe a specific sequence or precedence order.

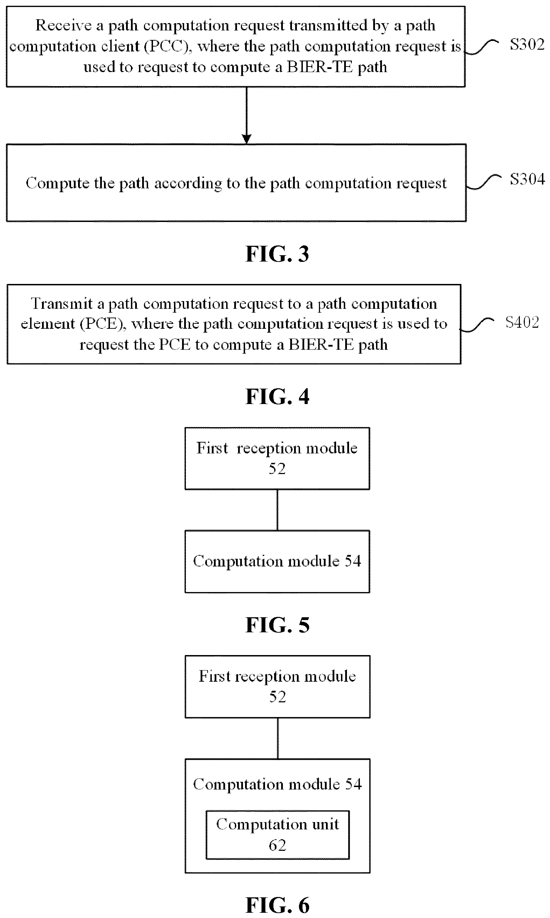

A route computation method is provided in an embodiment. FIG. 3 is a first flow chart of a route computation method according to an embodiment of the present disclosure. As shown in FIG. 3, the method includes the following steps S302 to S304.

In step S302, a path computation request transmitted by a PCC is received, where the path computation request is used to request to compute a BIER-TE path.

In step S304, the path is computed according to the path computation request.

The steps S302 to S304 may be, but not limited to be, executed by a path computation element.

By means of the steps, the BIER-TE path is computed according to the path computation request transmitted by the PCC, so that a problem in the related art that the BIER-TE path that meets traffic requirements cannot be quickly computed is solved, and an effect of quickly computing the BIER-TE path that meets the traffic requirements is achieved.

In an optional embodiment, the step of computing the path according to the path computation request includes: computing the path according to the path computation request and by utilizing at least one of the following information: topological information of a BIER network, constraint information of the BIER-TE path and BIER information.

In an optional embodiment, there may be many manners of carrying the constraint information of the BIER-TE path. The constraint information of the BIER-TE path may be carried in the path computation request, where the constraint information of the BIER-TE path may include at least one of the following: a link bandwidth, a reserved bandwidth, link coloring, and a metric. In another optional embodiment, there may be many manners of carrying the BIER information, for example, the BIER information may be carried in the path computation request, where the BIER information includes at least one of the following: BIER sub-domain information, bitstring length (BSL) information, source bit-forwarding router identifier information, and one or more pieces of destination bit-forwarding router identifier information.

In an optional embodiment, the path computation request may carry at least one of the following information: indication information for indicating that the path is established by using a BIER-TE technology; and a BIER record route object (RRO for short), where the BIER RRO is used to report a route followed by the BIER-TE path desired to be re-optimized.

In an optional embodiment, after the path is computed according to the path computation request, the method further includes: determining whether the path is successfully computed or not; notifying the computed BIER-TE path to the PCC when it is determined that the path is computed successfully; and/or, returning a failure response message to the PCC when it is determined that the path is not successfully computed.

In an optional embodiment, the step of notifying the computed BIER-TE path to the PCC includes: notifying bitstring information and a bitstring length (BSL) to the PCC, or notifying bit-forwarding router identifier information to the PCC. In another optional embodiment, a cause of a computation failure of the BIER-TE path is carried in the failure response message.

In an optional embodiment, the step of notifying the computed BIER-TE path to the PCC includes: carrying the computed BIER-TE path in a path request reply message and notifying the computed BIER-TE path to the PCC; where after the computed BIER-TE path is carried in the path request reply message and notified to the PCC, the method further includes: receiving an error notification transmitted by the PCC, where the error notification is used to indicate that the PCC cannot identify the path request reply message and/or the PCC cannot support a type of the path request reply message.

In an optional embodiment, before the step of receiving the path computation request transmitted by the PCC, the method further includes: performing a negotiation with the PCC to support a BIER-TE capability.

In an optional embodiment, the step of performing the negotiation with the PCC to support the BIER-TE capability includes: performing the negotiation with the PCC to support the BIER-TE capability by means of a manner of extending an open message in a path computation element protocol (PCEP).

FIG. 4 is a second flow chart of a path computation method according to an embodiment of the present disclosure. As shown in FIG. 4, the method includes the following step S402.

In step S402, a path computation request is transmitted to a PCE, where the path computation request is used to request to compute a BIER-TE path.

Step S402 may be, but not limited to be, executed by a path computation client.

In an optional embodiment, before the step S402, the method may further include: generating the path computation request.

In an optional embodiment, the path computation request carries at least one of following information: indication information indicating that the path is established by using a BIER technology, constraint information of the BIER-TE path, BIER information, and BIER record route object (RRO). The constraint information of the BIER-TE path includes at least one of the following: a link bandwidth, a reserved bandwidth, link coloring, and a metric. The BIER information includes at least one of the following: BIER sub-domain information, bitstring length (BSL) information, source bit-forwarding router identifier information, and one or more pieces of destination bit-forwarding router identifier information. The BIER RRO is used to report a route followed by the BIER-TE path desired to be re-optimized.

In an optional embodiment, after the step of transmitting the path computation request to the PCE, the method further includes: receiving the BIER-TE path transmitted by the PCE after the BIER-TE path is successfully computed by the PCE; and/or receiving a failure response message returned by the PCE after the BIER-TE path is not successfully computed by the PCE.

In an optional embodiment, the step of receiving the BIER-TE path includes: receiving bitstring information and a bitstring length (BSL), or receiving bit-forwarding router identifier information. In another optional embodiment, a cause of a computation failure of the BIER-TE path is carried in the failure response message.

In an optional embodiment, the step of receiving the BIER-TE path includes: receiving a path request reply message notified by the PCE, where the path request reply message carries the BIER-TE path computed by the PCE; and transmitting an error notification to the PCE when it is determined that the path request reply message cannot be identified and/or a type of the path request reply message cannot be supported.

In an optional embodiment, before the step of transmitting the path computation request to the PCE, the method further includes: performing a negotiation with the PCE to support a BIER-TE capability.

In an optional embodiment, the step of performing the negotiation with the PCE to support the BIER-TE capability includes: performing the negotiation with the PCE to support the BIER-TE capability by means of a manner of extending an open message in a path computation element protocol (PCEP).

Through the description of the above embodiments, those skilled in the art may clearly understand that the method according to the above embodiments may be implemented by means of software plus a necessary general hardware platform, and certainly, may be implemented in hardware, but in many cases, the former is a much more common implementation. Based on such an understanding, an essence of the technical solution of the present disclosure or a part of the technical solution of the present disclosure that contributes to the prior art may be embodied in the form of a software product. The computer software product is stored in a storage medium (such as a ROM/RAM, a magnetic disk, an optical disc) and includes one or more instructions to instruct a terminal device (which may be a mobile phone, a computer, a server, or a network device, and the like) to perform the method described in the embodiments of the present disclosure.

A path computation device is further provided according to an embodiment. The device is used to implement the above embodiments and optional implementations, and the descriptions thereof have been made and will not be repeated. As used below, the term "module" may be implemented through software, hardware or a combination of software and hardware which are able to achieve a predetermined function. Although the device described in the following embodiments is more generally implemented through software, an implementation through hardware or through a combination of software and hardware is also possible and conceived.

FIG. 5 is a block diagram showing a structure of a first path computation device according to an embodiment of the present disclosure. As shown in FIG. 5, the device includes a first reception module 52 and a computation module 54. The device will be illustrated below.

The first reception module 52 is configured to receive a path computation request transmitted by a path computation client (PCC), where the path computation request is used to request to compute a BIER-TE path. The computation module 54 is configured to compute the path according to the path computation request.

FIG. 6 is a block diagram showing a structure of a computation module 54 in an optional implementation of the first path computation device according to an embodiment of the present disclosure. As shown in FIG. 6, the computation module 54 includes a computation unit 62. The computation unit 62 will be illustrated below.

The computation unit 62 is configured to compute the path according to the path computation request and by utilizing at least one of the following information: topological information of a BIER network, constraint information of the BIER-TE path and BIER information.

In an optional embodiment, the constraint information of the BIER-TE path is carried in the path computation request, where the constraint information of the BIER-TE path includes at least one of the following: a link bandwidth, a reserved bandwidth, link coloring, and a metric. In another optional embodiment, the BIER information is carried in the path computation request, where the BIER information includes at least one of the following: BIER sub-domain information, bitstring length (BSL) information, source bit-forwarding router identifier information, and one or more pieces of destination bit-forwarding router identifier information.

In an optional embodiment, the path computation request carries at least one of the following information: indication information for indicating that the path is established by using a BIER-TE technology; and a BIER record route object (RRO), where the BIER RRO is used to report a route followed by the BIER-TE path desired to be re-optimized.

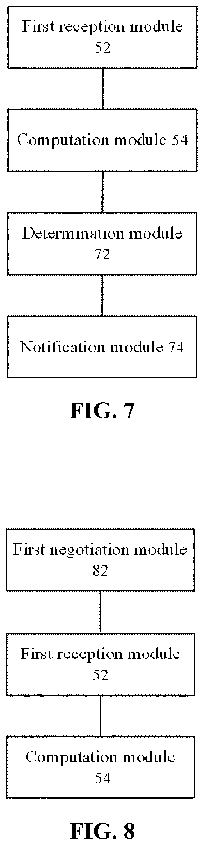

FIG. 7 is a first block diagram showing an optional structure of the first path computation device according to an embodiment of the present disclosure. As shown in FIG. 7, in addition to all modules shown in FIG. 5, the device includes a determination module 72 and a notification module 74. The device will be illustrated below.

The determination module 72 is connected to the computation module 54 and configured to, after the path is determined according to the path computation request, determine whether the path is successfully computed or not. The notification module 74 is connected to the determination module 72 and configured to, when the determination module 72 determines that the path is computed successfully, notify the computed BIER-TE path to the PCC; and/or, when the determination module 72 determines that the path is not successfully computed, return a failure response message to the PCC.

In an optional embodiment, the notification module 74 includes a first notification unit, which is configured to, when notifying the computed BIER-TE path to the PCC, notify bitstring information and a bitstring length (BSL) to the PCC, or notify bit-forwarding router identifier information to the PCC. In another optional embodiment, a cause of a computation failure of the BIER-TE path is carried in the failure response message.

In an optional embodiment, the notification module 74 includes a second notification unit, which is configured to, when notifying the computed BIER-TE path to the PCC, carry the computed BIER-TE path in a path request reply message and notify the computed BIER-TE path to the PCC. The device further includes a second reception module, which is configured to, after the computed BIER-TE path is carried in the path request reply message and notified to the PCC, receive an error notification transmitted by the PCC, where the error notification is used to indicate that the PCC cannot identify the path request reply message and/or the PCC cannot support a type of the path request reply message.

FIG. 8 is a second block diagram showing an optional structure of the first path computation device according to an embodiment of the present disclosure. As shown in FIG. 8, in addition to all modules shown in FIG. 5, the device includes a first negotiation module 82. The device will be illustrated below.

The first negotiation module 82 is connected to the first reception module 52 and configured to, before the path computation request transmitted by the PCC is received, negotiate with the PCC to support a BIER-TE capability.

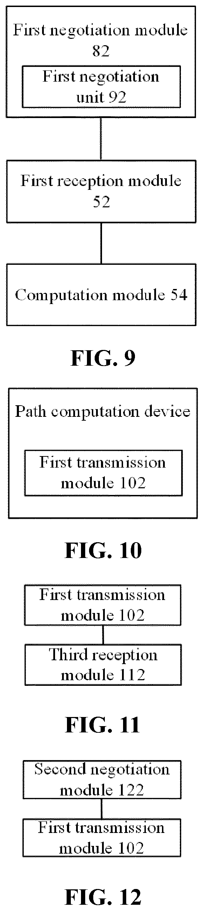

FIG. 9 is a block diagram showing a structure of the first negotiation module 82 in an optional implementation of the first path computation device according to an embodiment of the present disclosure. As shown in FIG. 9, the first negotiation module 82 includes a first negotiation unit 92. The first negotiation unit 92 will be illustrated below.

The first negotiation unit 92 is configured to negotiate with the PCC to support the BIER-TE capability by means of a manner of extending an open message in a path computation element protocol (PCEP).

FIG. 10 is a block diagram showing a structure of a second path computation device according to an embodiment of the present disclosure. As shown in FIG. 10, the device includes a first transmission module 102. The device will be illustrated below.

The first transmission module 102 is configured to transmit a path computation request to a path computation element (PCE), where the path computation request is used to request the PCE to compute a bit indexed explicit duplication traffic engineering (BIER-TE) path.

In an optional embodiment, the device may further include a generation module, which is configured to generate the path computation request.

In an optional embodiment, the path computation request carries at least one of following information: indication information indicating that the path is established by using a BIER technology, constraint information of the BIER-TE path, BIER information, and BIER record route object (RRO). The constraint information of the BIER-TE path includes at least one of the following: a link bandwidth, a reserved bandwidth, link coloring, and a metric. The BIER information includes at least one of the following: BIER sub-domain information, bitstring length (BSL) information, source bit-forwarding router identifier information, and one or more pieces of destination bit-forwarding router identifier information. The BIER RRO is used to report a route followed by the BIER-TE path desired to be re-optimized.

FIG. 11 is a first block diagram showing an optional structure of the second path computation device according to an embodiment of the present disclosure. As shown in FIG. 11, in addition to all modules shown in FIG. 10, the device includes a third reception module 112. The device will be illustrated below.

The third reception module 112 is connected to the first transmission module 102 and configured to, after the path computation request is transmitted to the PCE, receive the BIER-TE path transmitted by the PCE after the BIER-TE path is successfully computed by the PCE; and/or receive a failure response message returned by the PCE after the BIER-TE path is not successfully computed by the PCE.

In an optional embodiment, the third reception module 112 further includes a first reception unit, which is configured to, when receiving the BIER-TE path, receive bitstring information and a bitstring length (BSL), or receive bit-forwarding router identifier information. In another optional embodiment, a cause of a computation failure of the BIER-TE path is carried in the failure response message.

In an optional embodiment, the third reception module 112 includes a second reception unit, which is configured to, when receiving the BIER-TE path, receive a path request reply message notified by the PCE, where the path request reply message carries the BIER-TE path computed by the PCE. The device further includes a second transmission module, which is configured to, when it is determined that the path request reply message cannot be identified and/or a type of the path request reply message cannot be supported, transmit an error notification to the PCE.

FIG. 12 is a second block diagram showing an optional structure of the second path computation device according to an embodiment of the present disclosure. As shown in FIG. 12, in addition to all modules shown in FIG. 10, the device includes a second negotiation module 122. The device will be illustrated below.

The second negotiation module 122 is connected to the first transmission module 102 and configured to, before the path computation request is transmitted to the PCE, negotiate with the PCE to support a BIER-TE capability.

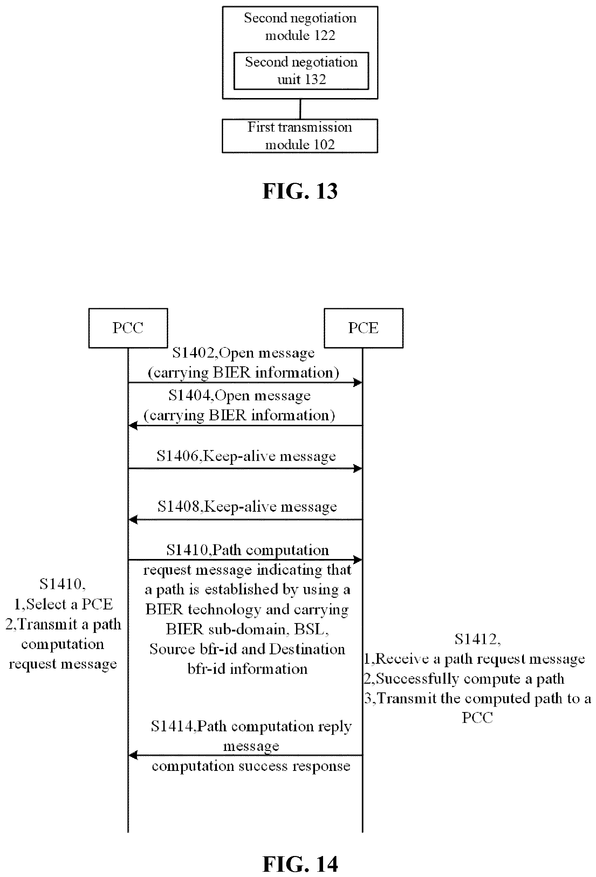

FIG. 13 is a block diagram showing a structure of the second negotiation module 122 in an optional implementation of the second path computation device according to an embodiment of the present disclosure. As shown in FIG. 13, the second negotiation module 122 includes a second negotiation unit 132. The second negotiation unit 132 will be illustrated below

The second negotiation unit 132 is configured to negotiate with the PCE to support the BIER-TE capability by means of a manner of extending an open message in a path computation element protocol (PCEP).

In the embodiments of the present disclosure, by employing a computing architecture of the PCE, a BIER-TE path computation method is proposed. The embodiments of the present disclosure will be illustrated below based on implementation examples in conjunction with accompanying drawings.

### A first implementation example

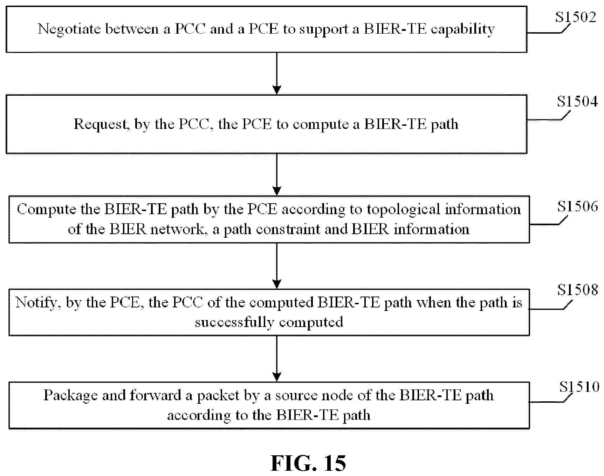

FIG. 14 is a schematic diagram of PCEP message interaction between a PCC and a PCE according to a first implementation example of the present disclosure, and FIG. 15 is a flow chart of a PCEP message between a PCC and a PCE according to the first implementation example of the present disclosure. As shown in FIG. 14 and FIG. 15, the first implementation example includes the following steps S1502 to S1510.

In step S1502, a negotiation is performed between the PCC and the PCE to support a BIER-TE capability.

This may be achieved by carrying BIER information in a PCEP open message (as shown in steps S1402 to S1408 in FIG. 14).

In step S1504, the PCC requests the PCE to compute a BIER-TE path (corresponding to step S1410 in FIG. 14; S1410 includes the following sub-steps: 1, selecting a PCE; and 2, transmitting a path computation request message).

In step S1504,
1) a BIER-TE path establishment protocol is negotiated between the PCC and the PCE.
   The PCC establishes a label switched path (LSP for short) by using a signaling according to an explicit route object (ERO for short) provided by the PCE. So far, both a PCEP and its extensions assume that a TE path is label-switched and established through a resource reservation protocol-traffic engineering (RSVP-TE for short) protocol. Here, a BIER technology is introduced to establish the BIER-TE path, so that the path request message needs to carry information that the path is established by using the BIER technology.
2) The path request message also needs to carry a sub-domain, a bitstring length (BSL for short), a source bit-forwarding router id (BFR-id for short) and a destination BFR-id.

In step S1506, the PCE computes the BIER-TE path according to topological information of a BIER network, a path constraint, and BIER information (corresponding to sub-step 1 of receiving the path request message in step S1412 in FIG. 14).

In step S1508, when the path is successfully computed, the PCE notifies the computed BIER-TE path to the PCC (corresponding to sub-step 2 of computing the path successfully and sub-step 3 of transmitting the computed path to the PCC in step S1412 in FIG. 14 as well as the step S1414).

Step S1508 may be implemented by carrying one or more BIER ERO subobjects in a path computation reply message. Information carried in the BIER ERO subobject includes information such as a bitstring.

In step S1510, a source node of the BIER-TE path packages and forwards a packet according to the BIER-TE path.

### A second implementation example

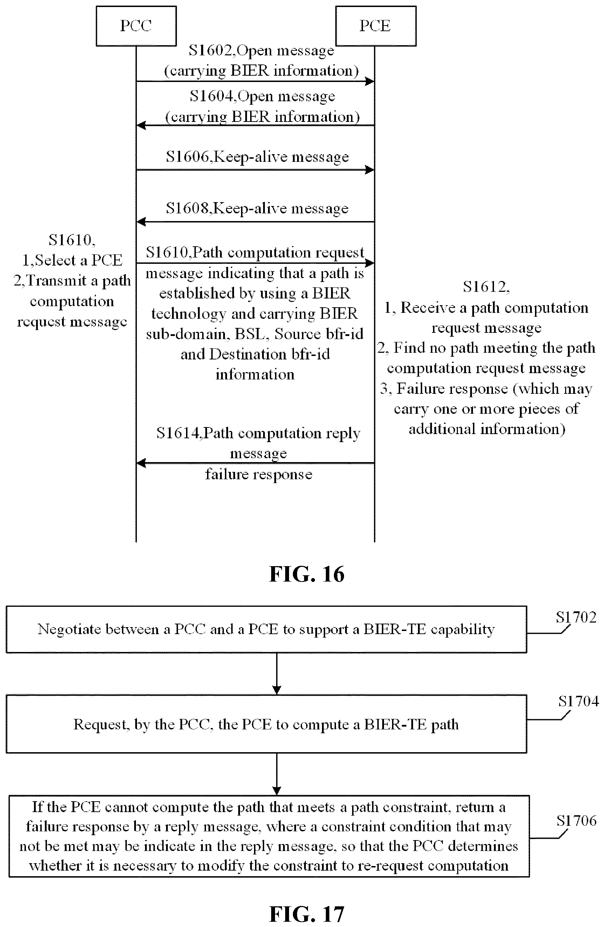

FIG. 16 is a schematic diagram of PCEP message interaction between a PCC and a PCE according to a second implementation example of the present disclosure; and FIG. 17 is a flow chart of a PCEP message between a PCC and a PCE according to the second implementation example of the present disclosure. As shown in FIG. 16 and FIG. 17, the second implementation example of the present disclosure includes the following steps S1702 to S1706.

In step S1702, a negotiation is performed between the PCC and the PCE to support a BIER-TE capability.

Step S1702 may be achieved by carrying BIER information in a PCEP open message (as shown in steps S1602 to S1608 in FIG. 16).

In step S1704, a path computation client (PCC) requests a path computation element (PCE) to compute a BIER-TE path (corresponding to the step S1610 in FIG. 16; S1610 includes the following sub-steps: 1, selecting a PCE; and 2, transmitting a path computation request message).

In step S1706, the PCE cannot compute a path that meets a path constraint, and then a failure response is returned by a reply message. A constraint condition that cannot be met may be indicated in the reply message so that the PCC determines whether it is necessary to modify the constraint to re-request computation (corresponding to steps S1612 to S1614 in FIG. 16; where S1612 includes the following sub-steps: 1, receiving a path computation request message; 2, finding no path meeting the path computation request message; and 3, performing a failure response which may carry one or more pieces of additional information).

### A third implementation example

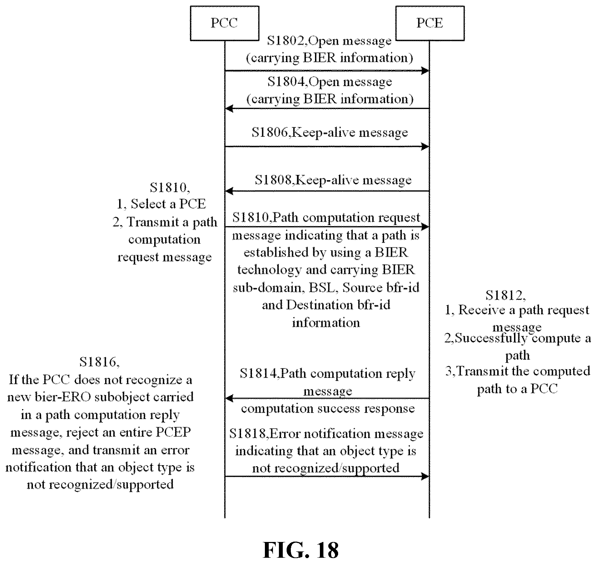

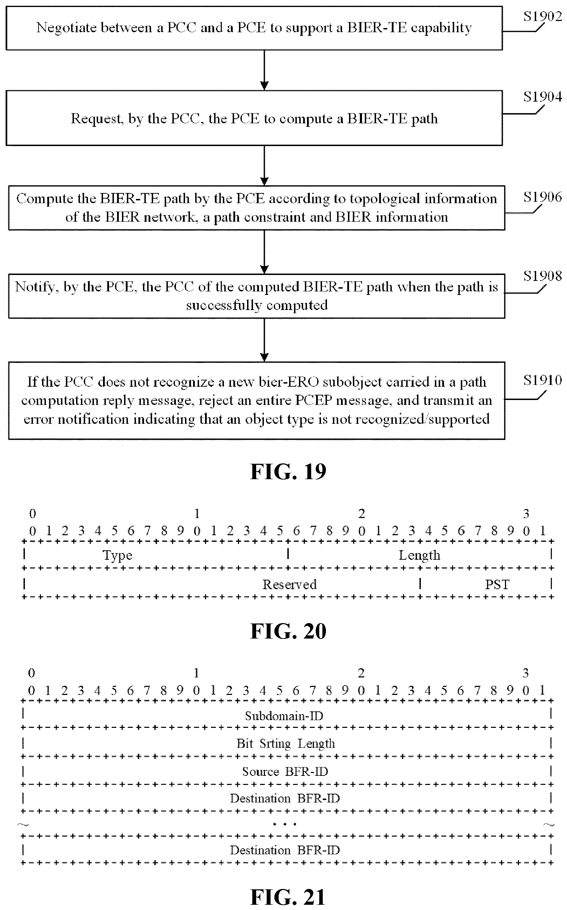

FIG. 18 is a schematic diagram of PCEP message interaction between a PCC and a PCE according to a third implementation example of the present disclosure; and FIG. 19 is a flow diagram of a PCEP message between a PCC and a PCE according to the third implementation example of the present disclosure. As shown in FIG. 18 and FIG. 19, the third implementation example of the present disclosure includes the following steps.

Steps S1902 to S1908 (corresponding to steps S1802 to S1814 in FIG. 18 which are the same as S1402 to 1414) are the same as steps S1502 to S1508, which will not be described here.

In step S1910, if the PCC does not recognize a new BIER-ERO subobject carried in a path computation reply message, it must reject an entire PCEP message, and must transmit an error notification that an object type is not recognized/supported (corresponding to steps S1816 to S1818 in FIG. 18).

### A fourth implementation example

As can be seen from the foregoing implementation examples, partial information may be carried in a path computation request message. In this implementation example, how to carry information in the path computation request message will be described.

FIG. 20 is a schematic diagram of carrying path establishment type information according to a fourth implementation example of the present disclosure. As shown in FIG. 20, a new path establishment type may be defined, and carried in the path computation request message, where the new path establishment type may be carried in a request parameter (RP for short) object.

FIG. 21 is a schematic diagram of carrying BIER information according to the fourth implementation example of the present disclosure. As shown in FIG. 21, a new BIER end-point object may be defined, and may carry BIER information, so that the BIER end-point object is carried in a path request message.

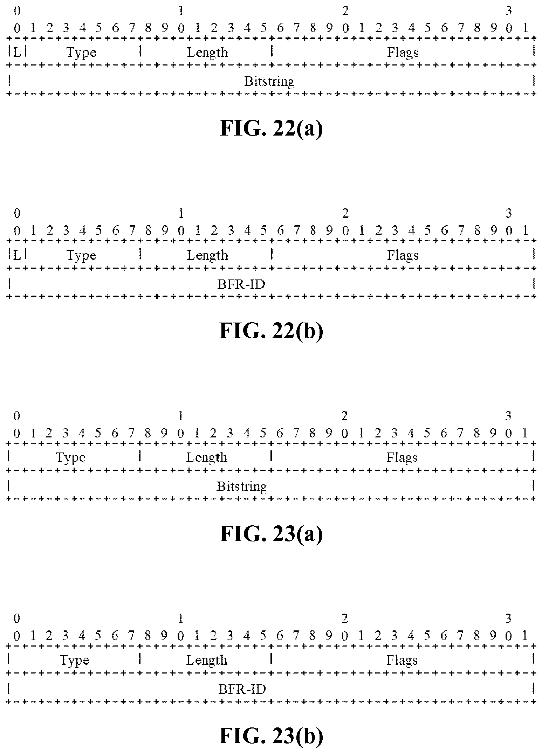

FIG. 22(a) and FIG. 22(b) are schematic diagrams of carrying information of a BIER-TE path according to the fourth implementation example of the present disclosure, which show two formats respectively. As shown in FIG. 22(a) and FIG. 22(b), the information of the BIER-TE path may be carried by using an explicit route object (ERO). Bitstring information and a bitstring length (BSL) may be carried, or bit-forwarding router identification information may be carried. The ERO may be carried in a path request message.

FIG. 23(a) and FIG. 23(b) are schematic diagrams of carrying an RRO according to the fourth implementation example of the present disclosure, which show two formats respectively. As shown in FIG. 23(a) and FIG. 23(b), a record route object (RRO for short) may be used in a path request message, to report a route followed by a TE path desired to be re-optimized.

It should be noted that the above modules may be implemented through software or hardware. For the latter, it may be implemented in the following manner, but it is not limited thereto: the above modules are all located in the same processor; or the above modules are respectively located in multiple processors.

Embodiments of the present disclosure further provide a storage medium. Optionally, in an embodiment, the above-mentioned storage medium may be configured to store a program code for performing the following steps:
S11, receiving a path computation request transmitted by a path computation client (PCC), where the path computation request is used to request to compute a bit indexed explicit replication (BIER)-traffic engineering (TE) path; and
S12, computing the path according to the path computation request.

Optionally, the storage medium is further configured to store a program code for performing the following step:
S21, transmitting a path computation request to a path computation element (PCE), where the path computation request is used to request the PCE to compute a bit indexed explicit replication (BIER)-traffic engineering (TE) path.

Optionally, in an embodiment, the foregoing storage medium may include, but is not limited to, a U disk, a read-only memory (ROM for short), a random access memory (RAM for short), a removable hard disk, a magnetic disk, an optical disc, and other media capable of storing the program codes.

Optionally, in an embodiment, a processor performs steps S11 to S12 according to the program code stored in the storage medium.

Optionally, in an embodiment, the processor performs the step S21 according to the program code stored in the storage medium.

Optionally, for specific examples in the embodiments, reference may be made to examples described in the foregoing embodiments and optional implementations, which will not be described herein again in the embodiments.

Obviously, those skilled in the art should understand that modules or steps of the present disclosure described above may be implemented by a general-purpose computing device, which may be concentrated on a single computing device or distributed over a network formed by multiple computing devices. Optionally, they may be implemented with a program code that is executable by the computing device, so that they may be stored in a storage device for execution by the computing device, and in some cases, the steps shown or described may be performed in a different order than that herein, or they are separately made into individual integrated circuit modules, or multiple of them are made into a single integrated circuit module. In this way, the present disclosure is not limited to any specific combination of hardware and software.

### INDUSTRIAL APPLICABILITY

In the embodiments of the present disclosure, a path computation request transmitted by a path computation client (PCC) is received, where the path computation request is used to request to compute a BIER-TE path; and the path is computed according to the path computation request, so that a problem in the related art that a BIER-TE path that meets service requirements cannot be quickly computed is solved, and an effect of quickly computing the BIER-TE path that meets the service requirements is achieved.

## Claims

1. A path computation method, comprising:
receiving (S302) a path computation request transmitted by a path computation client, PCC, wherein the path computation request is used to request to compute a bit indexed explicit replication-traffic engineering, BIER-TE, path, and the path computation request carries topological information of a BIER network or BIER information; and
computing (S304) the path according to the path computation request.

2. The method according to claim 1, wherein the path computation request further carries at least one of the following information:
constraint information of the BIER-TE path;
indication information for indicating that the path is established by using a BIER technology; and
a BIER record route object, RRO;
wherein the constraint information of the BIER-TE path comprises at least one of the following: a link bandwidth, a reserved bandwidth, link coloring, and a metric;
wherein the BIER information comprises at least one of the following: BIER sub-domain information; bitstring length, BSL, information; source bit-forwarding router identifier information; and at least of pieces of destination bit-forwarding router identifier information; and
wherein in case the BIER RRO is carried in the path computation request, the BIER RRO is used to report a route followed by the BIER-TE path desired to be re-optimized.

3. The method according to claim 1, after the computing (S304) the path according to the path computation request, the method further comprises:
determining whether the path is successfully computed or not; and
when it is determined that the path is computed successfully, notifying the computed BIER-TE path to the PCC, wherein the notifying the computed BIER-TE path to the PCC comprises: notifying bitstring information and a bitstring length, BSL, to the PCC, or notifying bit-forwarding router identifier information to the PCC; and/or,
when it is determined that the path is not successfully computed, returning a failure response message to the PCC, wherein a cause of a computation failure of the BIER-TE path is carried in the failure response message.

4. The method according to claim 1, after the computing (S304) the path according to the path computation request, the method further comprises:
determining whether the path is successfully computed or not; and
when it is determined that the path is computed successfully, notifying the computed BIER-TE path to the PCC; and/or, when it is determined that the path is not successfully computed, returning a failure response message to the PCC;
wherein the notifying the computed BIER-TE path to the PCC comprises: carrying the computed BIER-TE path in a path request reply message and notifying the computed BIER-TE path to the PCC;
wherein after the carrying the computed BIER-TE path in the path request reply message and notifying the computed BIER-TE path to the PCC, the method further comprises:
receiving an error notification transmitted by the PCC, wherein the error notification is used to indicate that the PCC cannot identify the path request reply message and/or the PCC cannot support a type of the path request reply message.

5. The method according to any one of claims 1 to 4, before the receiving (S302) the path computation request transmitted by the PCC, the method further comprises:
negotiating with the PCC to support a BIER-TE capability;
the negotiating with the PCC to support the BIER-TE capability comprises:
negotiating with the PCC to support the BIER-TE capability by means of a manner of extending an open message in a path computation element protocol, PCEP; wherein, the open message in the PCEP is extended by carrying the BIER information in the open message.

6. A path computation method, comprising:
transmitting (S402) a path computation request to a path computation element, PCE;
wherein the path computation request is used to request the PCE to compute a bit indexed explicit replication-traffic engineering, BIER-TE, path, and the path computation request carries topological information of a BIER network or BIER information.

7. The method according to claim 6, wherein the path computation request further carries at least one of following information:
indication information for indicating that the path is established by using a BIER technology;
constraint information of the BIER-TE path;
and
a BIER record route object, RRO;
wherein the constraint information of the BIER-TE path comprises at least one of the following: a link bandwidth, a reserved bandwidth, link coloring, and a metric;
wherein the BIER information comprises at least one of the following: BIER sub-domain information, bitstring length, BSL, information, source bit-forwarding router identifier information, and one or more pieces of destination bit-forwarding router identifier information; and
wherein in case the BIER RRO is carried in the path computation request, the BIER RRO is used to report a route followed by the BIER-TE path desired to be re-optimized.

8. The method according to claim 6, wherein after the transmitting (S402) the path computation request to the PCE, the method further comprises:
receiving the BIER-TE path transmitted by the PCE after the BIER-TE path is successfully computed by the PCE, wherein the receiving the BIER-TE path comprises: receiving bitstring information and a BSL, or receiving bit-forwarding router identifier information; and/or
receiving a failure response message returned by the PCE after the BIER-TE path is not successfully computed by the PCE, wherein a cause of a computation failure of the BIER-TE path is carried in the failure response message.

9. The method according to claim 6, after the transmitting (S402) the path computation request to the PCE, the method further comprises:
receiving the BIER-TE path transmitted by the PCE after the BIER-TE path is successfully computed by the PCE; and/or
receiving a failure response message returned by the PCE after the BIER-TE path is not successfully computed by the PCE;
wherein the receiving the BIER-TE path comprises: receiving a path request reply message notified by the PCE, wherein the path request reply message carries the BIER-TE path computed by the PCE; and
when it is determined that the path request reply message cannot be identified and/or a type of the path request reply message cannot be supported, transmitting an error notification to the PCE.

10. A path computation device, comprising:
a first reception module (52), which is configured to receive a path computation request transmitted by a path computation client, PCC, wherein the path computation request is used to request to compute a bit indexed explicit replication-traffic engineering, BIER-TE, path, and the path computation request carries topological information of a BIER network or BIER information; and
a computation module (54), which is configured to compute the path according to the path computation request.

11. The device according to claim 10, wherein the computation module (54) comprises:
a computation unit (62), which is configured to compute the path according to the path computation request and by utilizing at least one of the following information: the topological information of a BIER network, constraint information of the BIER-TE path and the BIER information;
the constraint information of the BIER-TE path is carried in the path computation request, wherein the constraint information of the BIER-TE path comprises at least one of the following: a link bandwidth, a reserved bandwidth, link coloring, and a metric; and/or,
the BIER information comprises at least one of the following: BIER sub-domain information, bitstring length, BSL, information, source bit-forwarding router identifier information, and one or more pieces of destination bit-forwarding router identifier information.

12. The device according to claim 10, further comprising:
a determination module (72), configured to, after the path is computed according to the path computation request, determine whether the path is successfully computed or not; and
a notification module (74), configured to, notify the computed BIER-TE path to the PCC when it is determined that the path is computed successfully; and/or return a failure response message to the PCC when it is determined that the path is not successfully computed, wherein a cause of a computation failure of the BIER-TE path is carried in the failure response message,
wherein the notification module (74) comprises a first notification unit, configured to, when notifying the computed BIER-TE path to the PCC, notify bitstring information and a bitstring length, BSL, to the PCC, or notify bit-forwarding router identifier information to the PCC.

13. The device according to claim 10, further comprising:
a determination module (72), configured to, after the path is computed according to the path computation request, determine whether the path is successfully computed or not; and
a notification module (74), configured to, notify the computed BIER-TE path to the PCC when it is determined that the path is computed successfully; and/or return a failure response message to the PCC when it is determined that the path is not successfully computed ;
wherein the notification module (74) comprises a second notification unit, configured to, when notifying the computed BIER-TE path to the PCC, carry the computed BIER-TE path in a path request reply message and notify the computed BIER-TE path to the PCC; and
wherein the device further comprises a second reception module, configured to receive an error notification transmitted by the PCC after the computed BIER-TE path is carried in the path request reply message and notified to the PCC;
wherein the error notification is used to indicate that the PCC cannot identify the path request reply message and/or the PCC cannot support a type of the path request reply message.

14. A path computation device, comprising:
a first transmission module (102), which is configured to transmit a path computation request to a path computation element, PCE, wherein the path computation request is used to request the PCE to compute a bit indexed explicit replication-traffic engineering, BIER-TE, path, and the path computation request carries topological information of a BIER network or BIER information.

15. A non-transitory computer-readable storage medium for storing computer-executable instructions, wherein the computer-executable instructions are arranged to execute the method according to any one of claims 1-9.

## Patentansprüche

1. Wegberechnungsverfahren, Folgendes umfassend:
Empfangen (S302) einer Wegberechnungsanfrage, die durch einen Wegberechnungs-Client (path computation client - PCC) übertragen wird, wobei die Wegberechnungsanfrage dazu verwendet wird, einen Weg bitindizierter expliziter Replikationsverkehrstechnik (bit indexed explicit replication-traffic engineering - BIER-TE) zu berechnen, und wobei die Wegberechnungsanfrage topologische Informationen eines BIER-Netzwerks oder BIER-Informationen führt; und
Berechnen (S304) des Wegs gemäß der Wegberechnungsanfrage.

2. Verfahren nach Anspruch 1, wobei die Wegberechnungsanfrage ferner mindestens eine der folgenden Informationen führt:
Beschränkungsinformationen des BIER-TE-Wegs;
Hinweisinformationen, um darauf hinzuweisen, dass der Weg unter Verwendung einer BIER-Technologie erstellt wird; und
ein BIER-Aufzeichnungsroutenobjekt (record route object- RRO);
wobei die Beschränkungsinformationen des BIER-TE-Wegs mindestens eine der folgenden umfassen: eine Link-Bandbreite, eine reservierte Bandbreite, Link-Einfärbung und eine Metrik;
wobei die BIER-Informationen mindestens eine der folgenden umfassen: BIER-Subdomäneninformationen; Bitfolgenlänge(BSL)-Informationen; Quellbit-Weiterleitungsrouter- Kennungsinformationen; und mindestens Teile von Zielbit-Weiterleitungsrouter-Kennungsinformationen; und
wobei, falls das BIER-RRO in der Wegberechnungsanfrage geführt wird, die BIER-RRO dazu verwendet wird, eine Route zu melden, welcher der BIER-TE-Weg folgt, der erneut optimiert werden soll.

3. Verfahren nach Anspruch 1, wobei das Verfahren nach Berechnen (S304) des Wegs gemäß der Wegberechnungsanfrage ferner Folgendes umfasst:
Bestimmen, ob der Weg erfolgreich berechnet wurde oder nicht; und
wenn bestimmt wird, dass der Weg erfolgreich berechnet wurde, Kommunizieren des berechneten BIER-TE-Wegs an den PCC, wobei das Kommunizieren des berechneten BIER-TE-Wegs an den PCC Folgendes umfasst: Kommunizieren von Bitfolgen-Informationen und einer Bitfolgenlänge (BSL) an den PCC oder Kommunizieren von Bit-Weiterleitungsrouter-Kennungsinformationen an den PCC; und/oder wenn bestimmt wird, dass der Weg nicht erfolgreich berechnet wurde, Zurücksenden einer Fehlerantwortnachricht an den PCC,
wobei in der Fehlerantwortnachricht eine Ursache für einen Berechnungsfehler des BIER-TE-Wegs geführt wird.

4. Verfahren nach Anspruch 1, wobei das Verfahren nach Berechnen (S304) des Wegs gemäß der Wegberechnungsanfrage ferner Folgendes umfasst:
Bestimmen, ob der Weg erfolgreich berechnet wurde oder nicht; und
wenn bestimmt wird, dass der Weg erfolgreich berechnet wurde, Kommunizieren des berechneten BIER-TE-Wegs an den PCC; und/oder wenn bestimmt wird, dass der Weg nicht erfolgreich berechnet wurde, Zurücksenden einer Fehlerantwortnachricht an den PCC;
wobei das Kommunizieren des berechneten BIER-TE-Wegs an den PCC umfasst: Führen des berechneten BIER-TE-Wegs in einer Weganfrageantwortnachricht und Kommunizieren des berechneten BIER-TE-Wegs an den PCC;
wobei das Verfahren nach dem Führen des berechneten BIER-TE-Wegs in der Weganfrageantwortnachricht und dem Kommunizieren des berechneten BIER-TE-Wegs an den PCC ferner umfasst:
Empfangen einer durch das PCC übertragenen Fehlerbenachrichtigung, wobei die Fehlerbenachrichtigung dazu verwendet wird, darauf hinzuweisen, dass der PCC die Weganfrageantwortnachricht nicht identifizieren kann und/oder der PCC einen Typ der Weganfrageantwortnachricht nicht unterstützen kann.

5. Verfahren nach einem der Ansprüche 1 bis 4, wobei das Verfahren vor dem Empfangen (S302) der durch das PCC gesendeten Wegberechnungsanfrage ferner Folgendes umfasst:
Verhandeln mit dem PCC zur Unterstützung einer BIER-TE-Fähigkeit;
wobei Verhandeln mit dem PCC zur Unterstützung der BIER-TE-Fähigkeit Folgendes umfasst:
Verhandeln mit dem PCC zur Unterstützung der BIER-TE-Fähigkeit mittels einer Art der Erweiterung einer offenen Nachricht in einem Wegberechnungselementprotokoll (path computation element protocol - PCEP); wobei die offene Nachricht in dem PCEP erweitert wird, indem die BIER-Informationen in der offenen Nachricht geführt werden.

6. Wegberechnungsverfahren, umfassend:
Übertragen (S402) einer Wegberechnungsanfrage an ein Wegberechnungselement (path computation element - PCE);
wobei die Wegberechnungsanfrage dazu verwendet wird, das PCE aufzufordern, einen Weg bitindizierter expliziter Replikationsverkehrstechnik (bit indexed explicit replication-traffic engineering - BIER-TE) zu berechnen, und wobei die Wegberechnungsanfrage topologische Informationen eines BIER-Netzwerks oder BIER-Informationen führt.

7. Verfahren nach Anspruch 6, wobei die Wegberechnungsanfrage ferner mindestens eine der folgenden Informationen führt:
Hinweisinformationen, um darauf hinzuweisen, dass der Weg unter Verwendung einer BIER-Technologie erstellt wird; Beschränkungsinformationen des BIER-TE-Wegs;
und
ein BIER-Aufzeichnungsroutenobjekt (record route object- RRO);
wobei die Beschränkungsinformationen des BIER-TE-Wegs mindestens eine der folgenden umfassen: eine Link-Bandbreite, eine reservierte Bandbreite, Link-Einfärbung und eine Metrik;
wobei die BIER-Informationen mindestens eine der folgenden umfassen: BIER-Subdomäneninformationen; Bitfolgenlänge(BSL)-Informationen; Quellbit-Weiterleitungsrouter- Kennungsinformationen; und ein oder mehrere Teile von Zielbit-Weiterleitungsrouter-Kennungsinformationen; und
wobei, falls das BIER-RRO in der Wegberechnungsanfrage geführt wird, das BIER-RRO dazu verwendet wird, eine Route zu melden, welcher der BIER-TE-Weg folgt, der erneut optimiert werden soll.

8. Verfahren nach Anspruch 6, wobei das Verfahren nach dem Übertragen (S402) der Wegberechnungsanfrage an das PCE ferner Folgendes umfasst:
Empfangen des durch das PCE übertragenen BIER-TE-Wegs, nachdem der BIER-TE-Weg erfolgreich durch das PCE berechnet wurde, wobei das Empfangen des BIER-TE-Wegs umfasst: Empfangen von Bitfolgen-Informationen und einer BSL oder Empfangen von Bit-Weiterleitungsrouter-Kennungsinformationen; und/oder
Empfangen einer Fehlerantwortnachricht, die durch das PCE zurückgesendet wird, nach dem der BIER-TE-Weg nicht erfolgreich durch das PCE berechnet wurde, wobei eine Ursache eines Berechnungsfehlers des BIER-TE-Wegs in der Fehlerantwortnachricht geführt wird.

9. Verfahren nach Anspruch 6, wobei das Verfahren nach dem Übertragen (S402) der Wegberechnungsanfrage an das PCE ferner Folgendes umfasst:
Empfangen des durch das PCE übertragenen BIER-TE-Wegs, nachdem der BIER-TE-Weg erfolgreich durch das PCE berechnet wurde; und/oder
Empfangen einer Fehlerantwortnachricht, die durch das PCE zurückgesendet wird, nachdem der BIER-TE-Weg nicht erfolgreich durch das PCE berechnet wurde;
wobei das Empfangen des BIER-TE-Wegs Folgendes umfasst: Empfangen einer Weganfrageantwortnachricht, die durch das PCE kommuniziert wird, wobei die Weganfrageantwortnachricht den durch das PCE berechneten BIER-TE-Weg führt; und
wenn bestimmt wird, dass die Weganfrageantwortnachricht nicht identifiziert werden kann und/oder ein Typ der Weganfrageantwortnachricht nicht unterstützt werden kann, Übertragen einer Fehlerbenachrichtigung an das PCE.

10. Wegberechnungsvorrichtung, Folgendes umfassend:
ein erstes Empfangsmodul (52), das dazu konfiguriert ist, eine Wegberechnungsanfrage zu empfangen, die durch einen Wegberechnungs-Client (path computation client - PCC) übertragen wird, wobei die Wegberechnungsanfrage dazu verwendet wird, einen Weg bitindizierter expliziter Replikationsverkehrstechnik (bit indexed explicit replication-traffic engineering - BIER-TE) zu berechnen, und wobei die Wegberechnungsanfrage topologische Informationen eines BIER-Netzwerks oder BIER-Informationen führt; und
ein Berechnungsmodul (54), das zum Berechnen des Wegs gemäß der Wegberechnungsanfrage konfiguriert ist.

11. Vorrichtung nach Anspruch 10, wobei das Berechnungsmodul (54) Folgendes umfasst:
eine Berechnungseinheit (62), die dazu konfiguriert ist, den Weg gemäß der Wegberechnungsanfrage unter Verwendung von mindestens einer der folgenden Informationen zu berechnen: den topologischen Informationen eines BIER-Netzwerks, Beschränkungsinformationen des BIER-TE-Wegs und den BIER-Informationen;
wobei die Beschränkungsinformationen des BIER-TE-Wegs in der Wegberechnungsanfrage geführt werden, wobei die Beschränkungsinformationen des BIER-TE-Wegs mindestens eine der folgenden umfassen: eine Link-Bandbreite, eine reservierte Bandbreite, Link-Einfärbung und eine Metrik; und/oder
die BIER-Informationen mindestens eine der folgenden umfassen: BIER-Subdomäneninformationen; Bitfolgenlänge(BSL)-Informationen; Quellbit-Weiterleitungsrouter-Kennungsinformationen; und ein oder mehrere Teile von Zielbit-Weiterleitungsrouter-Kennungsinformationen.

12. Vorrichtung nach Anspruch 10, ferner umfassend:
ein Bestimmungsmodul (72), das dazu konfiguriert ist, nach Berechnen des Wegs gemäß der Wegberechnungsanfrage zu bestimmen, ob der Weg erfolgreich berechnet wurde oder nicht; und
ein Kommunikationsmodul (74), das dazu konfiguriert ist, den berechneten BIER-TE-Weg an den PCC zu kommunizieren, wenn bestimmt wird, dass der Weg erfolgreich berechnet wurde;
und/oder eine Fehlerantwortnachricht an den PCC zurückzusenden, wenn bestimmt wird, dass der Weg nicht erfolgreich berechnet wurde, wobei in der Fehlerantwortnachricht eine Ursache für einen Berechnungsfehler des BIER-TE-Wegs geführt wird,
wobei das Kommunikationsmodul (74) eine erste Kommunikationseinheit umfasst, die dazu konfiguriert ist, wenn der berechnete BIER-TE-Weg an den PCC kommuniziert wird, Bitfolgeninformationen und eine Bitfolgenlänge (BSL) an den PCC zu kommunizieren oder Bit-Weiterleitungsrouter-Kennungsinformationen an den PCC zu kommunizieren.

13. Vorrichtung nach Anspruch 10, ferner umfassend:
ein Bestimmungsmodul (72), das dazu konfiguriert ist, nach Berechnen des Wegs gemäß der Wegberechnungsanfrage zu bestimmen, ob der Weg erfolgreich berechnet wurde oder nicht; und
ein Kommunikationsmodul (74), das dazu konfiguriert ist, den berechneten BIER-TE-Weg an den PCC zu kommunizieren, wenn bestimmt wird, dass der Weg erfolgreich berechnet wurde;
und/oder eine Fehlerantwortnachricht an den PCC zurückzusenden, wenn bestimmt wird, dass der Weg nicht erfolgreich berechnet wurde;
wobei das Kommunikationsmodul (74) eine zweite Kommunikationseinheit umfasst, die dazu konfiguriert ist, wenn der berechnete BIER-TE-Weg an den PCC kommuniziert wird, den berechneten BIER-TE-Weg in einer Weganfrageantwortnachricht zu führen und den berechneten BIER-TE-Weg an den PCC zu kommunizieren; und
wobei die Vorrichtung ferner ein zweites Empfangsmodul umfasst, das dazu konfiguriert ist, eine durch den PCC übertragene Fehlerbenachrichtigung zu empfangen, nachdem der berechnete BIER-TE-Weg in der Weganfrageantwortnachricht geführt und an den PCC kommuniziert wurde;
wobei die Fehlerbenachrichtigung dazu verwendet wird, darauf hinzuweisen, dass der PCC die Weganfrageantwortnachricht nicht identifizieren kann und/oder der PCC einen Typ der Weganfrageantwortnachricht nicht unterstützen kann.

14. Wegberechnungsvorrichtung, Folgendes umfassend:
ein erstes Übertragungsmodul (102), das dazu konfiguriert ist, eine Wegberechnungsanfrage an ein Wegberechnungselement (path computation element - PCE) zu übertragen, wobei die Wegberechnungsanfrage dazu verwendet wird, das PCE aufzufordern, einen Weg bitindizierter expliziter Replikationsverkehrstechnik (bit indexed explicit replication-traffic engineering - BIER-TE) zu berechnen, und wobei die Wegberechnungsanfrage topologische Informationen eines BIER-Netzwerks oder BIER-Informationen führt.

15. Nichttransitorisches computerlesbares Speichermedium zum Speichern computerausführbarer Anweisungen, wobei die computerausführbaren Anweisungen dazu ausgelegt sind, das Verfahren nach einem der Ansprüche 1-9 auszuführen.

## Revendications

1. Procédé de calcul de trajet, comprenant :
la réception (S302) d'une demande de calcul de trajet émise par un client de calcul de trajet, PCC, dans lequel la demande de calcul de trajet est utilisée pour demander de calculer un trajet à réplication explicite indexée par bit-ingénierie de trafic, BIER-TE, et la demande de calcul de trajet transporte une information topologique d'un réseau BIER ou une information BIER ; et
le calcul (S304) du trajet selon la demande de calcul de trajet.

2. Procédé selon la revendication 1, dans lequel la demande de calcul de trajet transporte en outre au moins l'une des informations suivantes :
une information de contrainte du trajet BIER-TE ;
une information d'indication pour indiquer que le trajet est établi en utilisant une technologie BIER ; et
un objet de route d'enregistrement, RRO, BIER ;
dans lequel l'information de contrainte du trajet BIER-TE comprend au moins l'une parmi ce qui suit : une bande passante de liaison, une bande passante réservée, une coloration de liaison et une métrique ;
dans lequel l'information BIER comprend au moins l'une parmi ce qui suit : une information de sous-domaine BIER ; une information de longueur de chaîne binaire, BSL ; une information d'identifiant de routeur de transfert de bits de source ; et au moins des fragments d'information d'identifiant de routeur de transfert de bits de destination ; et
dans lequel dans le cas où le RRO BIER est transporté dans la demande de calcul de trajet, le RRO BIER est utilisé pour signaler une route suivie par le trajet BIER-TE que l'on souhaite ré-optimiser.

3. Procédé selon la revendication 1, après le calcul (S304) du trajet selon la demande de calcul de trajet, le procédé comprend en outre :
la détermination permettant de savoir si le trajet est calculé avec succès ou non ; et
lorsqu'il est déterminé que le trajet est calculé avec succès, la notification du trajet BIER-TE calculé au PCC, dans lequel la notification du trajet BIER-TE calculé au PCC comprend : la notification d'une information de chaîne binaire et d'une longueur de chaîne binaire, BSL, au PCC, ou la notification d'une information d'identifiant de routeur de transfert de bits au PCC ; et/ou,
lorsqu'il est déterminé que le trajet n'est pas calculé avec succès, le renvoi d'un message de réponse d'échec au PCC, dans lequel une cause d'un échec de calcul du trajet BIER-TE est transportée dans le message de réponse d'échec.

4. Procédé selon la revendication 1, après le calcul (S304) du trajet selon la demande de calcul de trajet, le procédé comprend en outre :
la détermination permettant de savoir si le trajet est calculé avec succès ou non ; et
lorsqu'il est déterminé que le trajet est calculé avec succès, la notification du trajet BIER-TE calculé au PCC ; et/ou,
lorsqu'il est déterminé que le trajet n'est pas calculé avec succès, le renvoi d'un message de réponse d'échec au PCC ;
dans lequel la notification du trajet BIER-TE calculé au PCC comprend : le transport du trajet BIER-TE calculé dans un message de réponse de demande de trajet et la notification du trajet BIER-TE calculé au PCC ;
dans lequel après le transport du trajet BIER-TE calculé dans le message de réponse de demande de trajet et la notification du trajet BIER-TE calculé au PCC, le procédé comprend en outre :
la réception d'une notification d'erreur émise par le PCC, dans lequel la notification d'erreur est utilisée pour indiquer que le PCC ne peut pas identifier le message de réponse de demande de trajet et/ou que le PCC ne peut pas prendre en charge un type du message de réponse de demande de trajet.

5. Procédé selon l'une quelconque des revendications 1 à 4, avant la réception (S302) de la demande de calcul de trajet émise par le PCC, le procédé comprend en outre :
la négociation avec le PCC pour prendre en charge une capacité BIER-TE ;
la négociation avec le PCC pour prendre en charge la capacité BIER-TE comprend :
la négociation avec le PCC pour prendre en charge la capacité BIER-TE au moyen d'une manière d'étendre un message ouvert dans un protocole d'élément de calcul de trajet, PCEP ; dans lequel le message ouvert dans le PCEP est étendu par le transport de l'information BIER dans le message ouvert.

6. Procédé de calcul de trajet, comprenant :
l'émission (S402) d'une demande de calcul de trajet vers un élément de calcul de trajet, PCE ;
dans lequel la demande de calcul de trajet est utilisée pour demander au PCE de calculer un trajet à réplication explicite indexée par bit-ingénierie de trafic, BIER-TE, et la demande de calcul de trajet transporte une information topologique d'un réseau BIER ou une information BIER.

7. Procédé selon la revendication 6, dans lequel la demande de calcul de trajet transporte en outre au moins l'une des informations suivantes :
une information d'indication pour indiquer que le trajet est établi en utilisant une technologie BIER ;
une information de contrainte du trajet BIER-TE ;
et
un objet de route d'enregistrement, RRO, BIER ;
dans lequel l'information de contrainte du trajet BIER-TE comprend au moins l'une parmi ce qui suit : une bande passante de liaison, une bande passante réservée, une coloration de liaison et une métrique ;
dans lequel l'information BIER comprend au moins l'une parmi ce qui suit : une information de sous-domaine BIER, une information de longueur de chaîne binaire, BSL, une information d'identifiant de routeur de transfert de bits de source, et un ou plusieurs fragments d'une information d'identifiant de routeur de transfert de bits de destination ; et
dans lequel dans le cas où le RRO BIER est transporté dans la demande de calcul de trajet, le RRO BIER est utilisé pour signaler une route suivie par le trajet BIER-TE que l'on souhaite ré-optimiser.

8. Procédé selon la revendication 6, dans lequel après l'émission (S402) de la demande de calcul de trajet vers le PCE, le procédé comprend en outre :
la réception du trajet BIER-TE émis par le PCE après que le trajet BIER-TE est calculé avec succès par le PCE, dans lequel la réception du trajet BIER-TE comprend : la réception d'une information de chaîne binaire et d'une BSL, ou la réception d'une information d'identifiant de routeur de transfert de bits ; et/ou
la réception d'un message de réponse d'échec renvoyé par le PCE après que le trajet BIER-TE n'est pas calculé avec succès par le PCE, dans lequel une cause d'un échec de calcul du trajet BIER-TE est transportée dans le message de réponse d'échec.

9. Procédé selon la revendication 6, après l'émission (S402) de la demande de calcul de trajet vers le PCE, le procédé comprend en outre :
la réception du trajet BIER-TE émis par le PCE après que le trajet BIER-TE est calculé avec succès par le PCE ; et/ou la réception d'un message de réponse d'échec renvoyé par le PCE après que le trajet BIER-TE n'est pas calculé avec succès par le PCE ;
dans lequel la réception du trajet BIER-TE comprend : la réception d'un message de réponse de demande de trajet notifié par le PCE, dans lequel le message de réponse de demande de trajet transporte le trajet BIER-TE calculé par le PCE ; et
lorsqu'il est déterminé que le message de réponse de demande de trajet ne peut pas être identifié et/ou un type du message de réponse de demande de trajet ne peut pas être pris en charge, l'émission d'une notification d'erreur vers le PCE.

10. Dispositif de calcul de trajet, comprenant :
un premier module de réception (52), qui est configuré pour recevoir une demande de calcul de trajet émise par un client de calcul de trajet, PCC, dans lequel la demande de calcul de trajet est utilisée pour demander de calculer un trajet à réplication explicite indexée par bit-ingénierie de trafic, BIER-TE, et la demande de calcul de trajet transporte une information topologique d'un réseau BIER ou une information BIER ; et
un module de calcul (54), qui est configuré pour calculer le trajet selon la demande de calcul de trajet.

11. Dispositif selon la revendication 10, dans lequel le module de calcul (54) comprend :
une unité de calcul (62), qui est configurée pour calculer le trajet selon la demande de calcul de trajet et en utilisant au moins l'une des informations suivantes : l'information topologique d'un réseau BIER, une information de contrainte du trajet BIER-TE et l'information BIER ;
l'information de contrainte du trajet BIER-TE est transportée dans la demande de calcul de trajet, dans lequel l'information de contrainte du trajet BIER-TE comprend au moins l'une parmi ce qui suit : une bande passante de liaison, une bande passante réservée, une coloration de liaison et une métrique ; et/ou,
l'information BIER comprend au moins l'une parmi ce qui suit : une information de sous-domaine BIER, une information de longueur de chaîne binaire, BSL, une information d'identifiant de routeur de transfert de bits de source, et un ou plusieurs fragments d'une information d'identifiant de routeur de transfert de bits de destination.

12. Dispositif selon la revendication 10, comprenant en outre :
un module de détermination (72), configuré pour, après que le trajet est calculé selon la demande de calcul de trajet, déterminer si le trajet est calculé avec succès ou non ; et
un module de notification (74), configuré pour notifier le trajet BIER-TE calculé au PCC lorsqu'il est déterminé que le trajet est calculé avec succès ; et/ou renvoyer un message de réponse d'échec au PCC lorsqu'il est déterminé que le trajet n'est pas calculé avec succès, dans lequel une cause d'un échec de calcul du trajet BIER-TE est transportée dans le message de réponse d'échec,
dans lequel le module de notification (74) comprend une première unité de notification, configurée pour, lors de la notification du trajet BIER-TE calculé au PCC, notifier une information de chaîne binaire et une longueur de chaîne binaire, BSL, au PCC, ou notifier une information d'identifiant de routeur de transfert de bits au PCC.

13. Dispositif selon la revendication 10, comprenant en outre :
un module de détermination (72), configuré pour, après que le trajet est calculé selon la demande de calcul de trajet, déterminer si le trajet est calculé avec succès ou non ; et
un module de notification (74), configuré pour notifier le trajet BIER-TE calculé au PCC lorsqu'il est déterminé que le trajet est calculé avec succès ; et/ou renvoyer un message de réponse d'échec au PCC lorsqu'il est déterminé que le trajet n'est pas calculé avec succès ;
dans lequel le module de notification (74) comprend une seconde unité de notification, configurée pour, lors de la notification du trajet BIER-TE calculé au PCC, transporter le trajet BIER-TE calculé dans un message de réponse de demande de trajet et notifier le trajet BIER-TE calculé au PCC ; et
dans lequel le dispositif comprend en outre un second module de réception, configuré pour recevoir une notification d'erreur émise par le PCC après que le trajet BIER-TE calculé est transporté dans le message de réponse de demande de trajet et notifié au PCC ;
dans lequel la notification d'erreur est utilisée pour indiquer que le PCC ne peut pas identifier le message de réponse de demande de trajet et/ou que le PCC ne peut pas prendre en charge un type du message de réponse de demande de trajet.

14. Dispositif de calcul de trajet, comprenant :
un premier module d'émission (102), qui est configuré pour émettre une demande de calcul de trajet vers un élément de calcul de trajet, PCE, dans lequel la demande de calcul de trajet est utilisée pour demander au PCE de calculer un trajet à réplication explicite indexée par bit-ingénierie de trafic, BIER-TE, et la demande de calcul de trajet transporte une information topologique d'un réseau BIER ou une information BIER.

15. Support de stockage non transitoire lisible par ordinateur pour stocker des instructions exécutables par ordinateur, dans lequel les instructions exécutables par ordinateur sont conçues pour exécuter le procédé selon l'une quelconque des revendications 1 à 9.
